# EUROPEAN PATENT SPECIFICATION

(11) **EP 2 159 145 B1**
(45) Date of publication and mention of the grant of the patent: **11.08.2010**
(21) Application number: 08015278.8
(22) Date of filing: 29.08.2008
(51) Int. Cl.: B62K 11/00

(54) **An assembly for a motorcycle comprising a radiator and a battery, and a motorcycle equipped with such an assembly**
Anordnung für ein Motorrad mit einem Kühler und einer Batterie und ein mit dieser Anordnung ausgestattetes Motorrad
Ensemble pour motocyclette comportant un radiateur et une batterie, et motocyclette équipée d'un tel ensemble

(43) Date of publication of application: 03.03.2010
(73) Proprietor: Yamaha Motor Research & Development Europe s.r.l., 20050 Gerno di Lesmo (MI) (IT)
(72) Inventor: Galimberti, Stefano, 20038 Seregno, Milano (IT)
(74) Representative: Grünecker, Kinkeldey, Stockmair & Schwanhäusser Anwaltssozietät

(56) References cited:
- EP-A- 0 879 755
- JP-A- 2002 166 872
- JP-A- 2003 291 873
- US-A1- 2007 199 754

## Description

The present invention relates to the field of motorcycles. In particular, the present invention relates to the layout of motorcycles. In more details, the present invention relates to the location, disposition and dimension of component parts of a motorcycle such as, for instance, the battery and the radiator. Still in more detail, the present invention relates to the way the performances of several component parts and/or elements of a motorcycle can be improved and optimized by conveniently locating and disposing said component parts.

It is well known that designing new motorcycles represents an important and difficult challenge. This is in particular due to the fact that the layout of a motorcycle influences not only the overall look and appearance of the motorcycle, but also its aerodynamic and performances. Accordingly, many efforts have been made in the past for the purpose of finding convenient locations and dimensions for several component parts such as, for instance, the battery, the radiator or cooling system, or the like. For instance, the battery of a motorcycle has to meet several requirements. Big batteries would guarantee reliability and good performances on the one hand; however, on the other hand, too big batteries would result in the motorcycle becoming cumbersome and big, thus negatively affecting the overall appearance of the motorcycle. Moreover, in the case of big batteries, it could become difficult to find enough space and a convenient location for both the batteries and other component parts. Moreover, when batteries are located close to heat generating component parts such as, for instance, the engine or the exhaust pipe, the batteries could get overheated and finally damaged. It also has to be considered that batteries, in spite of their non-negligible dimensions, have a weight which is normally less than that of other component parts with similar dimensions. Accordingly, the location of the battery in a motorcycle with respect to other component parts also influences the balancing of the motorcycle. Inadequate balancing could influence the traveling performance and also annoy the driver and/or passenger of the motorcycle. It also has to be noted that the air stream or air flow generated during traveling, in particular at high speeds, is used for cooling several motor parts or components such as, for instance, the radiator, the cylinder or even the exhaust pipes. A big battery located for instance in the front portion of the motorcycle would represent an obstacle to the air flow, resulting in these component parts or elements getting overheated. It is known that catalysts exploit their function (capturing the polluting components of the exhaust gases) only if their temperature is comprised between a predefined range (the activation temperature range is usually comprised between 550 and 650 degrees); a catalyst placed behind (in the traveling direction) a big or cumbersome battery would not experience the cooling effect arising during travel due to the resulting air stream or air flow. The same considerations as stated above with respect to catalysts also apply for instance to the cylinder of the motorcycle. It is in fact well-known that cylinders are cooled by means of both the cooling liquid flowing from the radiator and the air stream arising during travel. In the case of the radiator, difficulties are normally faced during design of the motorcycle due to the relevant dimensions of the radiator and the important function to be exploited by same. Large radiators would guarantee adequate cooling of the coolant fluid but would influence the overall layout of the motorcycle. The motorcycle would become too cumbersome and it would also be difficult to find an adequate location for other component parts. Moreover, the radiator would also represent an obstacle to the air flow arising during travel, so that other component parts of the motorcycle located behind the radiator could become overheated.

Accordingly, in an attempt to overcome as many as possible of the problems and/or drawbacks outlined above, several solutions relating in particular to the layout and design of many component parts of motorcycles have been suggested in recent years by the manufacturers of motorcycles. For instance, solutions have been proposed in the past such as placing a small battery behind the fuel tank and beneath the seat of the motorcycle. In this way, space is saved and can be used for other component parts which need to be located close to the engine and/or cylinder. Moreover, the balancing of the overall motorcycle is not negatively influenced by the battery. However, in spite of the above advantages offered by this solution, other problems and/or drawbacks arise. For instance, some of the disadvantages arising relate to the wiring of the motorcycle, in particular to the cables connecting the battery to other component parts which need to be supplied with electrical power; wiring may become troublesome and, therefore, expensive due to the increased distance between the battery and said component parts. Moreover, small batteries usually do not offer the same performances (electrical power supplied, reliability and duration) as offered by bigger batteries (due for instance to the reduced quantity of fluid contained in the battery). Accordingly, for some applications, larger batteries may be preferred and still need to be located in proximity of the engine and/or cylinder. Also in the case of the radiator and/or cooling system several solutions have been proposed in the past for overcoming the problems disclosed above. For instance, in some cases, it has been suggested to locate the radiator behind the engine and/or cylinder (still in the traveling direction); however, since the air flow toward the radiator is at least partially obstructed by said engine and/or cylinder, a ventilator has to be used for cooling the cooling fluid. According to other solutions, small radiators were placed in the front portion of the motorcycle, in particular before the engine. In this way, the engine can still experience the cooling effect produced by the air flow arising during travel; however, small radiators mean reduced quantity of cooling fluid, which means in tum reduced cooling performances.

A further example of a solution known in the art is disclosed in document US-A-2007/0199754.

Accordingly, in view of the above, it is an object of the present invention to overcome the problems stated above. In particular, it is an object of the present invention to provide adequate placement, location and dimensions for the battery and the cooling system of a motorcycle. In more detail, it is a further object of the present invention to provide adequate placement, location and dimensions of the battery and radiator of a motorcycle so as to not negatively influence the overall appearance of the motorcycle and still insuring good performances of both the battery and radiator, as well as of other component parts of the motorcycle. It is also an object of the present invention to arrange the radiator and the battery of the motorcycle so that the air stream arising during travel can adequately cool the radiation (the coolant fluid contained therein), along with other component parts of the motorcycle located in proximity of said battery and said radiator. A further object of the present invention is that of using the air flow that flows toward the battery for additionally cooling said radiator.

In general terms, the present invention is based on the consideration that the problems affecting the prior art motorcycles may be overcome by adequately arranging, designing and dimensioning some component parts of the motorcycle, in particular the battery and the radiator. In particular, the battery which is normally perceived as an encumbering component part may be opportunely used for improving the cooling performance of the radiator. A further consideration on which the present invention is based relates to the fact that both the battery and the radiator, if opportunely designed and dimensioned, may be placed in the front portion of the motorcycle (before the engine and/or cylinder), without representing an obstacle to the air flow so that component parts located behind said battery and radiator can be adequately cooled. Moreover, even the cooling of both the radiator and the battery is improved when same are placed before the engine or cylinder.

On the basis of the considerations as stated above, according to the present invention the problems affecting the prior art motorcycles are overcome or at least greatly reduced by the features defined in claim 1.

Preferred embodiments of the present invention are laid down in the dependent claims.

Further advantages, objects and features as well as embodiments of the present invention are defined in the appended claims and will become more apparent with the following detailed description when taken with reference to the accompanying drawings, in which identical or corresponding parts are identified by the same reference numerals. In particular, in the drawings:
Fig. 1 relates to a schematic side view of a motorcycle, with some of the component parts of said motorcycle being located and dimensioned according to the present invention;
Fig. 1a relates to a further side view (from the left) of a motorcycle according to the present invention;
Fig. 1b relates to a schematic side view (from the right) of a motorcycle according to the present invention;
Fig. 2 relates to a schematic enlarged view of a portion of a motorcycle, depicting the way component parts (in particular battery and radiator) of said motorcycle can be located, designed and dimensioned according to the present invention;
Fig. 3 relates to a schematic front view of a portion of a motorcycle showing the way some component parts of said motorcycle (in particular battery and radiator) can be located, designed, and dimensioned according to the present invention;
Fig. 3a relates to a schematic front view showing additional details of the way component parts of a motorcycle (the radiator in particular) may be arranged, designed and dimensioned according to the present invention.

While the present invention is described with reference to the embodiments as illustrated in the following detailed description as well as in the drawings, it has to be appreciated that the following detailed description as well as the drawings are not intended to limit the scope of the present invention to the particular illustrative embodiments disclosed, but rather the described illustrative embodiments merely exemplify the various aspects of the present invention, the scope of which is defined by the appended claims.

The present invention is understood to be of particular advantage when applied to two-wheeled motorcycles, such as, for instance, motorbikes or the like. For this reason, examples will be given in the following, in which corresponding embodiments of the present inventions are applied to motorcycles, in particular to motorbikes. However, it has to be noted that the applications of the present invention are not limited to the case of motorcycles, in particular to the case of motorbikes; on the contrary, the present invention may also be conveniently and advantageously applied to other motorcycles, in particular to three or even four-wheeled motorcycles such as, for instance, choppers, quads, or the like.

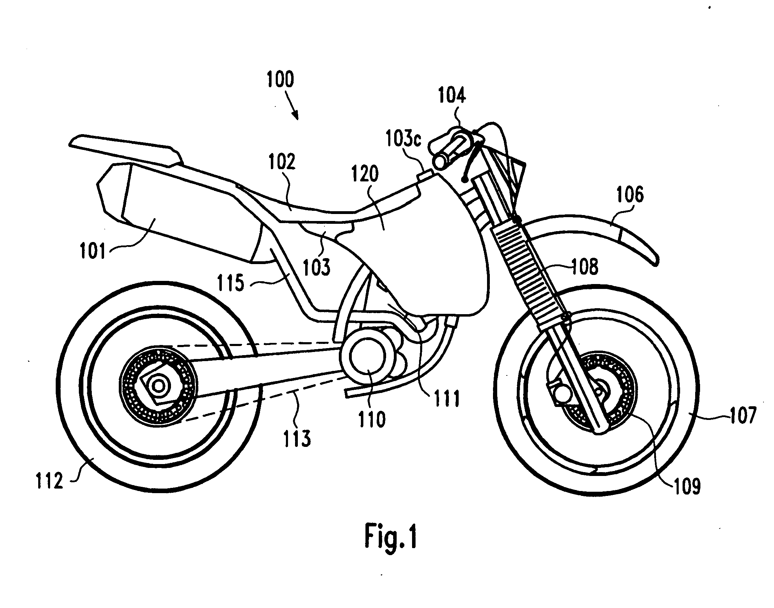

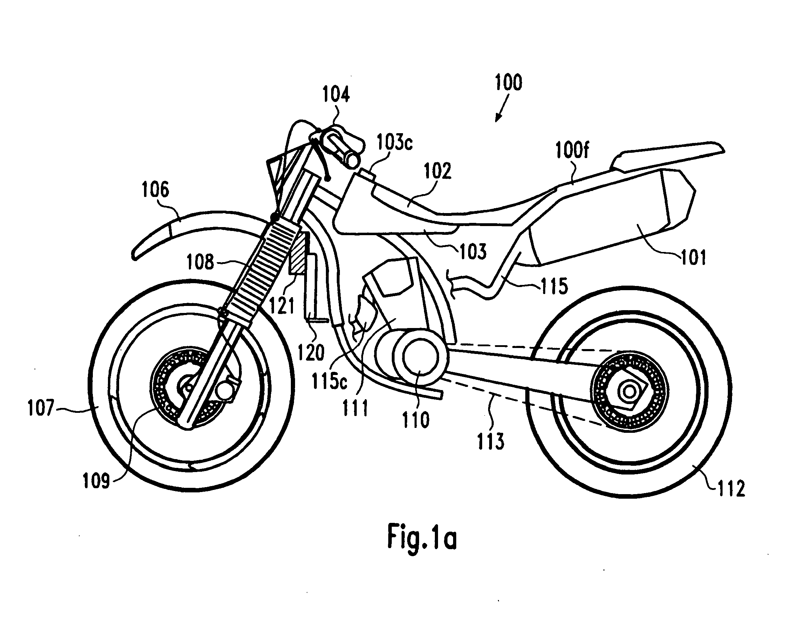

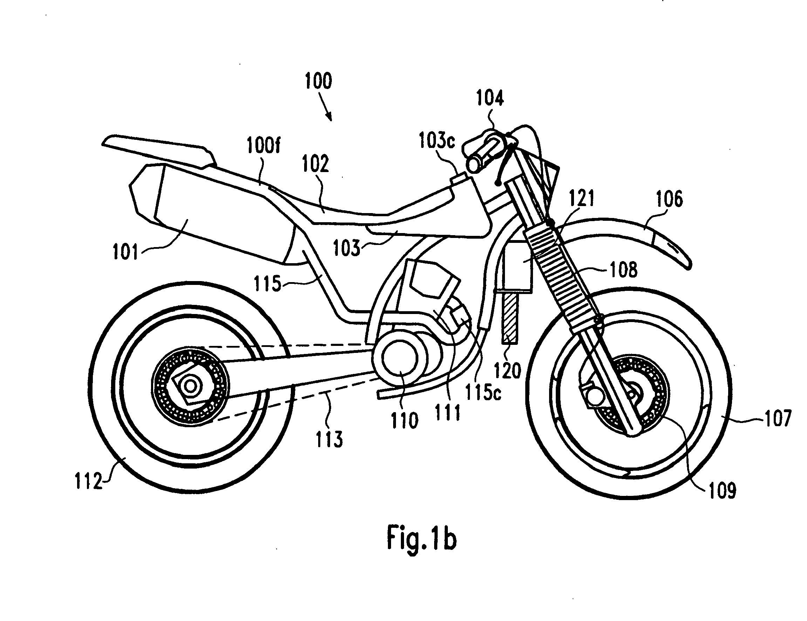

In the following, some details and features of the present invention will be described with reference to Fig. 1.

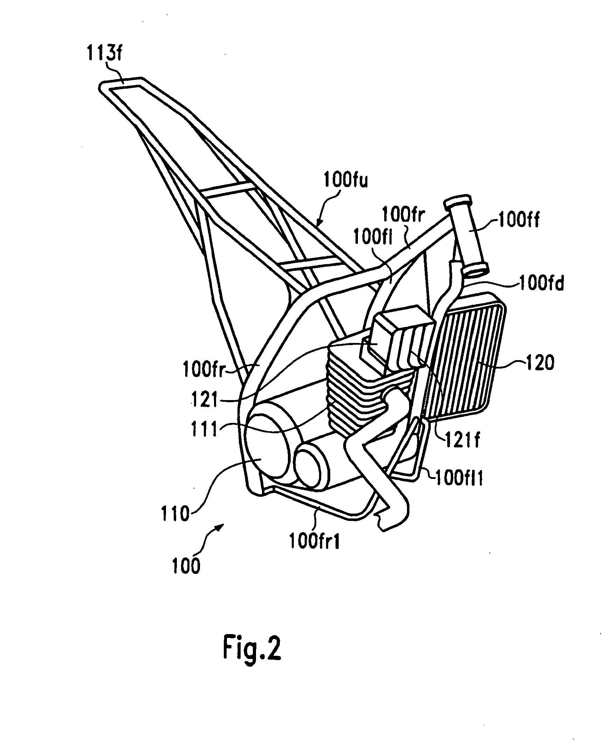

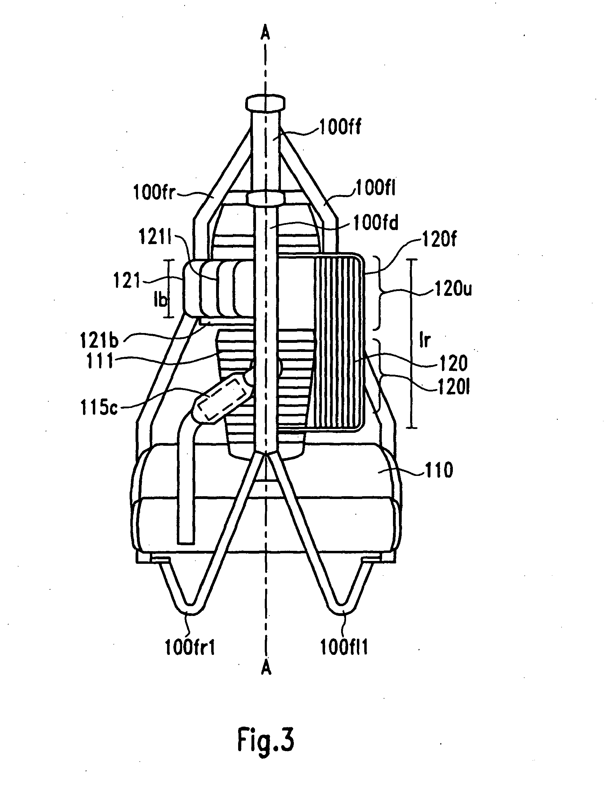

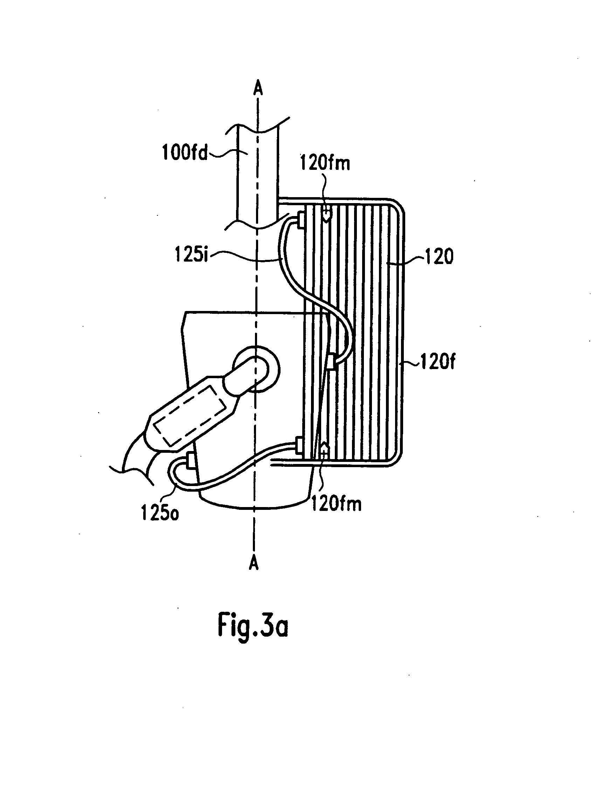

In Fig. 1, reference numeral 100 identifies a motorcycle. Although some portions and/or components or even accessories common to usual motorcycles have been omitted in Fig. 1 for the sake of clarity, the most important features of common motorcycles have been depicted therein and relate in particular to a main frame (to be described in more detail in the following) supporting a main engine 110 comprising a cylinder 111 (in the following also referred to as cylinder head or cylinder block 111). The motorcycle 100 depicted in Fig. 1 further comprises a seat 102 and a fuel tank 103 with a fuel tank cap 103c. Moreover, a side cover element 130, is depicted in Fig. 1, covering at least partially the fuel tank 103, along with other component parts of the motorcycle 100 located beneath the fuel tank 103. It has to be understood that a corresponding side cover element (not depicted in the drawings) is mounted on the motorcycle 100, on the left side thereof; this left side cover element, along with the right side cover element 130 depicted in Fig. 1 belong to a cover assembly conferring the motorcycle 100 the desired aerodynamics and protecting, as stated above, at least partially the fuel tank 103, as well as other component parts located beneath said fuel tank 103. The front wheel 107 is supported by a front fork 108 and comprises a front brake disk 109; the front fork 108 is stably attached or fixed to the main frame by means of a pipe 100ff (see also Figs. 2 and 3).

In the same way, the motorcycle 100 depicted in Fig. 1 comprises a rear wheel 112 with a sprocket, a chain 113 being further provided to transmit drive force to the rear wheel 112 through the rear sprocket. Reference 104 in Fig. 1 identifies a handlebar provided with brake handles and corresponding cables extending therefrom to the brake disk 109. In more detail, reference numeral 106 identifies a front fender provided to prevent the motorcycle 100 and/or the driver and/or passenger from being splashed with mud. As anticipated above, some usual components, parts and/or features of common motorcycles have been either omitted in Fig. 1 or not identified by corresponding reference numerals for the sake of clarity; these features may relate for instance to a rear cushion, rear direction indicators, a rear fender, a speed reducer, details of the engine 110 or cylinder 111 or the like. Even if not essential to the present invention, these omitted or not identified features and/or their equivalents have to be considered as being comprised in the motorcycle 100 depicted in Fig. 1. Finally, reference numeral 115 in Fig. 1 identifies an exhaust gas pipe extending from the cylinder 111 toward the rear of the motorcycle (toward the left in Fig. 1) and comprising an end portion 101. For instance, said end portion 101 may comprise a catalyst.

As anticipated above, the essential features of the present invention relate to the location, layout, design and reciprocal disposition of the component parts of a motorcycle. In particular, the essential features of the present invention relate to the location, layout, design reciprocal disposition and performances of those component parts of a motorcycle usually located behind the front fork 108 and in the area or space beneath the fuel tank 102. Some of these essential features will be described in detail in the following with reference to Figs. 1a, 1b and 2, wherein those features which have already been described above with reference to Fig. 1 are identified by the same reference numerals.

In Figures 1a, 1b and 2, reference numeral 100f identifies the main frame of the motorcycle 100 depicted therein. Said main frame 100f comprises a u-shaped tube 100fu extending along the longitudinal direction of the motorcycle and supporting the seat 102 and the fuel tank 103. The main frame 100f further comprises a head pipe 100ff (with the front fork 108 extending therefrom) and a down tube 100fd extending downwardly from said head pipe or tube 100ff. Moreover, a right side tube 100fr and a left side tube 100fl extend downwardly and rearwardly from said head pipe 100ff on opposite sides of the motorcycle 100, i.e. on the right and on the left side, respectively, of said motorcycle 100. The right tube 100fr is joined to the down tube 100fd by means of a bottom right side tube 100fr1, whilst the left side tube 100fl is joined to the down tube 100fd by means of a left bottom tube 100fl1. The plurality of tubes cited above and belonging to the main frame 100f of the motorcycle, in particular the left and right side tube 100fl and 100fr and the down tube 100fd support, along with the bottom tubes 100fr1 and 100fl1, the main engine 110 and the cylinder or cylinder head 111. As apparent from Figures 1a, 1b and 2, a radiator 120 and a battery or accumulator 121 are also provided, with said radiator 120 and said battery 121 being located behind the front fork 108 and being supported by the down tube 100fd of the main frame 100f. In the particular embodiment of the present invention depicted in Figures 1a, 1b and 2, the radiator 120 is located on the left side of the down tube 100fd (on the right side when viewing Figure 2) whilst the battery 121 is located on the right side of the down tube 100fd (on the left side when viewing Figure 2). Of course, alternative solutions and/or dispositions of the battery 121 and the radiator 120 belong to the present invention, such as, for instance, a solution according to which the battery is located on the left side of the motorcycle (of the down tube 100fd) whilst the radiator 120 is located on the right side of the motorcycle (on the right side of the down tube 100fd). Some advantages arising from disposing the radiator 120 and the battery 121 according to the embodiment of the present invention as depicted in Figures 1a, 1b and 2 may be appreciated. In fact, as apparent for instance from Figure 1a, the battery 121 (depicted in dashed lines) has a front face (facing toward the front of the motorcycle) which is closer to the front fork 108 than the front surface of the radiator 120 (also facing toward the front of the motorcycle). In this way, air flowing toward the battery 121 (toward its front face) can be conveniently deviated (at least partially) toward the radiator 120 (toward its front surface). In this way, additional cooling of the coolant fluid flowing inside the radiator can be obtained, with evident advantages in terms of improved cooling performances. Moreover, due to the different dimensions of the battery 121 and the radiator 120, an area is defined beneath the battery through which air can flow without obstacles. That means that component parts such as, for instance, the cylinder head 111 located behind the battery can enjoy the additional cooling effect due to the air flowing through this area during travelling. In other words, the radiator 120 is adequately cooled due to the additional cooling arising from the air deviated toward the radiator by the battery. Moreover the radiator 120, being located beside the down tube 100fd (either on the left or the right side thereof) does not obstruct completely the airflow during travelling so that air can flow beside the radiator toward other component parts such as for instance the cylinder 111, which are therefore adequately cooled. In the same way, the battery also does not represent an obstacle for the air flow due to its particular disposition and reduced dimension with respect to those of the radiator.

In the following with reference to Figures 2 and 3, some additional features and/or advantages of the present invention will be described: as usual, in Figures 2 and 3, those features already described above with reference to previous Figures are identified by the same reference numerals.

As apparent from Figure 3, the radiator 120 is supported by a u-shaped support or tube 120f fixed to the down tube 100fd at its opposite end portions. In the same way, a support element 121b is provided for supporting the battery 121, with said support element 121b extending from the down tube 100fd. Still with reference to Figure 3, it appears clearly that the radiator 120 comprises an upper portion 120u and a lower portion 120l; moreover, the radiator 120 extends in a direction substantially vertical or at a slight angle with respect to the vertical (see Figure 2) to a predefined length Ir. Also the battery 121 extends substantially in the same direction as the radiator but to a predefined length Ib which is less than the length Ir relating to the radiator 120. Thus, a free area is created, located essentially below the battery and in correspondence or proximity of the lower portion 1201 of the radiator on the opposite side thereof with respect to the down tube 100fd. The cylinder 111 or at least a portion thereof is visible to a viewer standing in front of the motorcycle. That means that air flowing through this area can flow without obstacles and/or obstructions toward said cylinder 111, thus providing an additional cooling effect in addition to that provided by the cooling fluid cooled by the radiator. For the sake of clarity, in Figure 3, the dashed line A-A identifies the vertical plane of symmetry of the motorcycle. The radiator 120 and the battery 121 results therefore, as depicted in Figure 3, to be located on opposite sides of said plan of symmetry A-A. As apparent from Figure 3, even the exhaust gas pipe 115 extending from an exhaust gas port located at the front face of the cylinder is also visible through the area beneath the battery. That means that air flowing through this area can flow even toward said exhaust gas pipe (or a portion thereof) which can therefore enjoy the cooling effect arising from said airflow. In the same way, in those cases as depicted in Figure 3, in which a catalyst 115c is located inside the portion of the exhaust pipe 115 arranged in front of the cylinder 111, also this catalyst 115c could be effectively and conveniently cooled by said airflow. Air deviating means 121l such as, for instance, blades or the like oriented at an angle with respect to the front face of the battery 121 are provided for the purpose of deviating the airflow flowing toward said blades 121l or battery 121 toward said radiator 120. According to the needs and/or circumstances, an additional free area can be left between the down tube 100fd and the radiator 120; this additional free area (see Figure 3) would allow additional air to flow therethrough toward component parts of the motorcycle located behind the radiator 120.

In the following, further additional features and/or advantages of the present invention will be highlighted with reference to Figures 3a wherein as usual, features and/or component parts or the like already described above with reference to previous Figures are identified by the same reference numerals.

As apparent from Figure 3a, fixing means 120fm are provided for the purpose of fixing the radiator 120 to the u-shaped support tube 120f. This fixing means may comprise for instance screws, bolts or the like or even pressure or snap fixing means. Moreover, an inlet pipe 125i and an outlet pipe 125o are depicted in Figure 3a with said inlet pipe 125i and said outlet pipe 125o being provided for the purposes of allowing coolant fluid to flow to and from said radiator 120, respectively. In particular, the inlet tube or pipe 125i allows coolant fluid to flow from the cylinder 111 to the radiator 120, whilst the outlet pipe 125o allows coolant fluid to flow from said radiator 120 to said cylinder 111. As apparent from Figure 3a, the inlet pipe 125i and the outlet pipe 125o are provided on opposite sides with respect to the plane of symmetry A-A. This in particular allows at least the outlet pipe 125o (or a portion thereof) to enjoy the cooling effect resulting from the air flowing through the free area located beneath the battery (not depicted in Figure 3a) and in proximity of the lower portion of the radiator 120 on the opposite side thereof with respect to the plane of symmetry A-A.

It arises therefore from the above disclosure that the layout and/or assembly according to the present invention allows the drawbacks affecting the prior art layouts and/or assemblies to be overcome or at least strongly reduced or minimized. In particular, lit has been demonstrated with the present disclossure that the layout and/or assembly according to the present invention offers evident advantages in terms of functionality and design. These advantages may be summarized once again as follows.

The battery is located in proximity of component parts of the motorcycle which need to be supplied with electrical power; in this way, wiring the electrical cables between the battery and said component parts become an easy operation which can be exploited quickly and at reasonable or contained costs. Moreover, extra small batteries no longer need to be used since the battery is no longer located under the seat of the motorcycle or in corresponding places. Furthermore, the battery does not represent an obstacle to the airflow arising during travelling so that air can freely flow toward component parts of the motorcycle located behind the battery through a free area located beneath said battery. These component parts may comprise for instance the cylinder or cylinder head, a catalyst or the like which otherwise could get overheated due to the heat generated during operations of said cylinder or cylinder head. A very good balance of the motorcycle is obtained by placing the radiator on opposite side of the plane of symmetry of the motorcycle with respect to the battery. The corresponding weights are in fact similar and can be therefore compensated. The radiator does not need to be of reduced dimension so that there is no need to use additional cooling devices such as, for instance, ventilators or the like. In fact, the radiator may extend according to the circumstances and/or needs in a direction substantially vertical so that adequate dimension of the radiator may be reached. In spite of its "normal" dimensions, neither the radiator represents an obstacle to the airflow since air may flow beside the radiator toward component parts of the motorcycle located behind said radiator. Moreover, air can be deviated from the battery to the radiator so that said radiator can enjoy an additional cooling effect.

While the present invention has been described with reference to the particular embodiments depicted in the drawings, it has to be understood that the present invention is not limited to the particular embodiments described, but rather that various amendments may be introduced into the embodiments described without departing from the scope of the present invention, which is defined by the appended claims.

For instance, it will appear clear to those skilled in the art that the same results as highlighted above may be obtained by locating the radiator on the right side and the battery on the left side of the plane of symmetry of the motorcycle. Moreover, the battery may be located in proximity of the lower portion or even of the central portion of the radiator, depending thereon which of the component parts located behind said battery and said radiator needs to be cooled by the airflow arising during travelling.

## Claims

1. A motorcycle (100), said motorcycle (100) comprising a main frame (100f) with a longitudinal plane of symmetry A-A extending substantially vertically, and an assembly comprising at least a radiator (120) and a battery (121); **characterized in that** said radiator (120) is arranged on one side of said plane of symmetry A-A, whilst said battery (121) is arranged on the opposite side of said plane of symmetry A-A with respect to said radiator (120).

2. Motorcycle as claimed in claim 1, **characterized in that** both said radiator (120) and said battery (121) of said assembly are fixed to the frame (100f) of said motorcycle (100).

3. Motorcycle as claimed in claim 2, **characterized in that**, said assembly is fixed to a down tube (100fd) of said frame (100f).

4. Motorcycle as claimed in claim 3, **characterized in that**, said assembly comprises a first support element (120f) for said radiator (120) and a second support element (121 b) for said battery (121), both said first and second support elements (120f, 121b) being fixed to said down tube (100fd) of said frame (100f) of said motorcycle (100).

5. Motorcycle as claimed in any one of claims 1 to 4, **characterized in that**, said radiator extends substantially vertically to a predefined length (lr) and comprises an upper portion (120u) and a lower portion (120l), **in that** said battery is arranged beside said upper portion (120u) of said radiator (120), and **in that** said battery extends vertically to a second predefined length (lb) which is less than said first predefined length.

6. Motorcycle as claimed in any one of claims 1 to 5, **characterized in that**, both said radiator (120) and said battery (121) have a front face facing toward the front of said motorcycle, and **in that**, said front face of said battery is located forward of said front face of said radiator (120), so that said front face of said battery is closer to the front wheel (107) than said front face of said radiator.

7. Motorcycle as claimed in claim 6, **characterized in that**, said assembly further comprises air deviating means (1211) adapted to deviate, during travelling of said motorcycle, the air impeaching on them toward said radiator..

8. Motorcycle as claimed in claim 8, **characterized in that**, said air deviating means comprise a plurality of blades extending substantially vertically and oriented at an angle with respect to said front face of said battery.

9. A motorcycle as claimed in one of claims 1 to 8, said motorcycle comprising a cylinder (111) along with an outlet pipe (125o) allowing coolant fluid to flow from said radiator (120) to said cylinder (111), and an inlet pipe (125i) allowing coolant fluid to flow from said cylinder (111) to said radiator (120), **characterized in that** said inlet and outlet pipes (125i, 125o) are connected to said cylinder (111) at positions located at opposite sides with respect to said plane of symmetry A-A, respectively.

10. A motorcycle as claimed in claim 9, **characterized in that** an area can be identified below said battery (121), with further components and or parts of said motorcycle (100) arranged beyond said assembly being visible through said area from the front side of said motorcycle.

11. A motorcycle as claimed in claim 10, **characterized in that** at least a portion of said cylinder (111) is visible through said area from the front side of said motorcycle (100).

12. A motorcycle as claimed in one of claims 9 and 10, **characterized in that** said motorcycle further comprises an exhaust pipe (115), and **in that** at least a portion of said exhaust pipe is visible through said area from the front side of said motorcycle.

13. A motorcycle as claimed in claim 12, **characterized in that** said visible portion of said exhaust pipe (115) comprises a catalyst (115c).

14. A motorcycle as claimed in one of claims 10 to 13, **characterized in that** at least a portion of either said inlet pipe (125i) or said outlet pipe (125o) is visible through said area from the front side of said motorcycle (100).

## Patentansprüche

1. Motorrad (100), wobei das Motorrad (100) einen Hauptrahmen (100f) mit einer LängsSymmetrieebene A-A, die sich im Wesentlichen vertikal erstreckt, und eine Baugruppe umfasst, die wenigstens einen Kühler (120) und eine Batterie (121) umfasst;
**dadurch gekennzeichnet, dass** der Kühler (120) an einer Seite der Symmetrieebene A-A angeordnet ist, während die Batterie (121) an der gegenüberliegenden Seite der Symmetrieebene A-A in Bezug auf den Kühler (120) angeordnet ist.

2. Motorrad nach Anspruch 1, **dadurch gekennzeichnet, dass** sowohl der Kühler (120) als auch die Batterie (121) der Baugruppe an dem Rahmen (100f) des Motorrades (100) befestigt sind.

3. Motorrad nach Anspruch 2, **dadurch gekennzeichnet, dass** die Baugruppe an einem Unterrohr (100fd) des Rahmens (100f) befestigt ist.

4. Motorrad nach Anspruch 3, **dadurch gekennzeichnet, dass** die Baugruppe ein erstes Trageelement (120f) für den Kühler (120) und ein zweites Trageelement (121b) für die Batterie (121) umfasst, wobei sowohl das erste als auch das zweite Trageelement (120f, 121b) an dem Unterrohr (100fd) des Rahmens (100f) des Motorrades (100) befestigt sind.

5. Motorrad nach einem der Ansprüche 1 bis 4, **dadurch gekennzeichnet, dass** sich der Kühler im Wesentlichen vertikal über eine vordefinierte Länge (lr) erstreckt und einen oberen Abschnitt (120u) sowie einen unteren Abschnitt (120l) umfasst, **dadurch**, dass die Batterie neben dem oberen Abschnitt (120u) des Kühlers (120) angeordnet ist und dass sich die Batterie vertikal über eine zweite vordefinierte Länge (lb) erstreckt, die kürzer ist als die erste vordefinierte Länge.

6. Motorrad nach einem der Ansprüche 1 bis 5, **dadurch gekennzeichnet, dass** sowohl der Kühler (120) als auch die Batterie (121) eine vordere Fläche haben, die zur Vorderseite des Motorrades hin gewandt ist, und dass sich die vordere Fläche der Batterie vor der vorderen Fläche des Kühlers (120) befindet, so dass sich die vordere Fläche der Batterie näher an dem Vorderrad (107) befindet als die vordere Fläche des Kühlers.

7. Motorrad nach Anspruch 6, **dadurch gekennzeichnet, dass** die Baugruppe des Weiteren eine Luftableiteinrichtung (121l) umfasst, die so eingerichtet ist, dass sie beim Fahren des Motorrades die auf sie auftreffende Luft zu dem Kühler ableitet.

8. Motorrad nach Anspruch 7, **dadurch gekennzeichnet, dass** die Luftableiteinrichtung eine Vielzahl von Flügeln umfasst, die sich im Wesentlichen vertikal erstrecken und in einem Winkel in Bezug auf die vordere Fläche der Batterie ausgerichtet sind.

9. Motorrad nach einem der Ansprüche 1 bis 8, wobei das Motorrad einen Zylinder (111) zusammen mit einem Auslassrohr (125o), das Kühlfluid von dem Kühler (120) zu dem Zylinder (111) strömen lässt, und einem Einlassrohr (25i) umfasst, das Kühlfluid von dem Zylinder (111) zu dem Kühler (120) strömen lässt, **dadurch gekennzeichnet, dass** das Einlass- und das Auslassrohr (125i, 125o) an Positionen mit dem Zylinder (111) verbunden sind, die sich an in Bezug auf die Symmetrieebene A-A einander gegenüberliegenden Seiten befinden.

10. Motorrad nach Anspruch 9, **dadurch gekennzeichnet, dass** ein Bereich unterhalb der Batterie (121) identifiziert werden kann, wobei weitere Komponenten und/oder Teile des Motorrades (100), die jenseits der Baugruppe angeordnet sind, von der Vorderseite des Motorrades her durch den Bereich hindurch sichtbar sind.

11. Motorrad nach Anspruch 10, **dadurch gekennzeichnet, dass** wenigstens ein Abschnitt des Zylinders (111) von der Vorderseite des Motorrades her durch den Bereich (100) hindurch sichtbar ist.

12. Motorrad nach einem der Ansprüche 9 und 10, **dadurch gekennzeichnet, dass** das Motorrad des Weiteren ein Auspuffrohr (115) umfasst und das wenigstens ein Teil des Auspuffrohres von der Vorderseite des Motorrades her durch den Bereich hindurch sichtbar ist.

13. Motorrad nach Anspruch 12, **dadurch gekennzeichnet, dass** der sichtbare Teil des Auspuffrohrs (115) einen Katalysator (115c) umfasst.

14. Motorrad nach einem der Ansprüche 10 bis 13, **dadurch gekennzeichnet, dass** wenigstens ein Abschnitt entweder des Einlassrohrs (125i) oder des Auslassrohrs (125o) von der Vorderseite des Motorrades (100) her durch den Bereich hindurch sichtbar ist.

## Revendications

1. Motocycle (100), ledit motocycle (100) comprenant un cadre principal (100f) avec un plan longitudinal de symétrie A-A s'étendant de façon sensiblement verticale, et un ensemble comprenant au moins un radiateur (120) et une batterie (121) ; **caractérisé en ce que** ledit radiateur (120) est agencé sur un côté dudit plan de symétrie A-A, alors que ladite batterie (121) est agencée sur le côté opposé dudit plan de symétrie A-A par rapport audit radiateur (120).

2. Motocycle selon la revendication 1, **caractérisé en ce que** ledit radiateur (120) ainsi que ladite batterie (121) dudit ensemble sont fixés au cadre (100f) dudit motocycle (100).

3. Motocycle selon la revendication 2, **caractérisé en ce que** ledit ensemble est fixé à un tube descendant (100fd) dudit cadre (100f).

4. Motocycle selon la revendication 3, **caractérisé en ce que** ledit ensemble comprend un premier élément de support (120f) pour ledit radiateur (120) et un second élément de support (121b) pour ladite batterie (121), lesdits premier et second éléments de support (120f, 121b) étant fixés audit tube descendant (100fd) dudit cadre (100f) dudit motocycle (100).

5. Motocycle selon une quelconque des revendications 1 à 4, **caractérisé en ce que** ledit radiateur s'étend de façon sensiblement verticale sur une longueur prédéfinie (lr) et comprend une partie supérieure (120u) et une partie inférieure (120l), **en ce que** ladite batterie est agencée à côté de ladite partie supérieure (120u) dudit radiateur (120), et **en ce que** ladite batterie s'étend verticalement sur une seconde longueur prédéfinie (lb) qui est inférieure à ladite première longueur prédéfinie.

6. Motocycle selon une quelconque des revendications 1 à 5, **caractérisé en ce que** ledit radiateur (120) ainsi que ladite batterie (121) comportent une face avant tournée vers l'avant dudit motocycle, et **en ce que** ladite face avant de ladite batterie est située à l'avant de ladite face avant dudit radiateur (120), de sorte que ladite face avant de ladite batterie soit plus près de la roue avant (107) que ladite face avant dudit radiateur.

7. Motocycle selon la revendication 6, **caractérisé en ce que** ledit ensemble comprend en outre des moyens déflecteurs d'air (121l) adaptés pour défléchir, au cours du déplacement dudit motocycle, l'air entrant en contact avec eux vers ledit radiateur.

8. Motocycle selon la revendication 8, **caractérisé en ce que** lesdits moyens déflecteurs d'air comprennent une pluralité d'aubes s'étendant de façon sensiblement verticale et orientées à un angle par rapport à ladite face avant de ladite batterie.

9. Motocycle selon une des revendications 1 à 8, ledit motocycle comprenant un cylindre (111) conjointement à un tuyau de sortie (125o) permettant à un fluide de refroidissement de s'écouler dudit radiateur (120) audit cylindre (111), et un tuyau d'entrée (125i) permettant à un fluide de refroidissement de s'écouler dudit cylindre (111) audit radiateur (120), **caractérisé en ce que** lesdits tuyaux d'entrée et de sortie (125i, 125o) sont raccordés audit cylindre (111) dans des positions situées sur des côtés opposés par rapport audit plan de symétrie A-A, respectivement.

10. Motocycle selon la revendication 9, **caractérisé en ce qu'**une zone peut être identifiée en dessous de ladite batterie (121), avec des composants et/ou des parties supplémentaires dudit motocycle (100) agencés au-delà dudit ensemble visibles à travers ladite zone à partir du côté avant dudit motocycle.

11. Motocycle selon la revendication 10, **caractérisé en ce qu'**au moins une partie dudit cylindre (111) est visible à travers ladite zone à partir du côté avant dudit motocycle (100).

12. Motocycle selon une des revendications 9 et 10, **caractérisé en ce que** ledit motocycle comprend en outre un tuyau d'échappement (115), et **en ce qu'**au moins une partie dudit tuyau d'échappement est visible à travers ladite zone à partir du côté avant dudit motocycle.

13. Motocycle selon la revendication 12, **caractérisé en ce que** ladite partie visible dudit tuyau d'échappement (115) comprend un catalyseur (115c).

14. Motocycle selon une des revendications 10 à 13, **caractérisé en ce qu'**au moins une partie dudit tuyau d'entrée (125i) ou dudit tuyau de sortie (125o) est visible à travers ladite zone à partir du côté avant dudit motocycle (100).
